# FASCICULE DE BREVET EUROPEEN

(11) **EP 4 575 890 B1**
(45) Date de publication et mention de la délivrance du brevet: **08.07.2026**
(21) Numéro de dépôt: 24219613.7
(22) Date de dépôt: 12.12.2024
(51) Int. Cl.: G06K 19/02, G06K 19/077

(54) **CARTE À PUCE MÉTALLIQUE AVEC ANTENNE RADIO-FRÉQUENCE ET PROCÉDÉ DE FABRICATION D'UNE TELLE CARTE À PUCE**
METALLCHIPKARTE MIT HOCHFREQUENZANTENNE UND VERFAHREN ZUR HERSTELLUNG EINER SOLCHEN CHIPKARTE
METAL CHIP CARD WITH RADIO-FREQUENCY ANTENNA AND METHOD FOR MANUFACTURING SUCH A CHIP CARD

(30) Priorité: 20.12.2023 FR 2314611
(43) Date de publication de la demande: 25.06.2025
(73) Titulaire: Idemia France, 92400 Courbevoie (FR)
(72) Inventeur: ALI, Ahmed, 92400 Courbevoie (FR); GROULT, Tiphaine, 92400 Courbevoie (FR)
(74) Mandataire: Idemia

(56) Documents cités:
- WO-A1-2023/002331
- FR-A1- 3 105 856
- KR-A- 20180 019 983
- US-A1- 2021 049 431
- US-A1- 2021 081 748

## Description

### Domaine Technique

L'invention se rapporte au domaine des cartes à puce et porte plus particulièrement sur les cartes à puce métalliques aptes à fonctionner en mode sans contact.

### Technique antérieure

L'utilisation des cartes à puce (ou cartes à microcircuit) est aujourd'hui largement répandue dans la vie quotidienne. De telles cartes sont par exemple utilisées comme cartes bancaires, cartes de fidélité, cartes d'accès etc., et peuvent prendre divers formats selon leurs utilisations respectives. Les cartes à puce peuvent être conçues pour réaliser divers types de fonctions, notamment pour effectuer des transactions, telles que des transactions bancaires (transaction de paiement, de transfert...), des transactions d'authentification, etc.

De façon connue, une carte à puce comprend généralement un corps de carte qui est équipé d'une puce électronique configurée pour échanger des signaux avec l'extérieur et réaliser diverses fonctions selon l'utilisation souhaitée de la carte. Pour ce faire, les cartes à puce sont munies de moyens de communication permettant d'interagir avec l'extérieur, typiquement avec un lecteur NFC ou lecteur externe.

Traditionnellement, une carte à puce est conçue pour coopérer avec un lecteur NFC externe au moyen de contacts externes accessibles à la surface de la carte. Un lecteur NFC externe peut ainsi positionner des broches de contact appropriées sur les contacts externes de la carte afin d'établir une communication par contact.

Récemment, les cartes à puce sans contact ont connu un essor croissant en raison du gain en rapidité et en simplicité liées aux transactions sans contact. Pour ce faire, les cartes sans contact embarquent une antenne radiofréquence (RF) permettant l'échange de signaux RF avec un lecteur NFC externe (par exemple en champ proche NFC pour « Near Field Communication » en anglais). Cette antenne RF est généralement composée d'une pluralité de spires conductrices qui s'étendent dans le corps de la carte.

La structure et l'apparence des cartes à puce peuvent varier selon le cas. Les cartes à puce métalliques connaissent en particulier un intérêt croissant en raison notamment de l'aspect esthétique attractif de ces cartes (reflets métalliques, effet brossé en surface etc.), de l'impression de qualité qu'elles peuvent procurer (poids appréciable du métal, esthétique haute gamme), ou encore de la connotation de prestige qui y est associée pour leurs utilisateurs. En raison notamment de leur poids important et de l'impression de haute qualité qu'elles dégagent, ces cartes sont privilégiées par certains utilisateurs pour servir de marqueur social et d'élément différenciant.

Il a cependant été observé que la présence de métal dans le corps d'une carte à puce pose des difficultés majeures lorsque la carte embarque une antenne RF pour fonctionner en mode sans contact. Le métal agit comme blindage électromagnétique et bloque ou gêne les signaux RF échangés par l'antenne RF avec l'extérieur. Le métal présent dans le corps de carte peut ainsi perturber les communications sans contact d'une carte à puce avec un lecteur NFC externe et gêner par exemple la réalisation d'une transaction sans contact (de paiement ou autre).

Une solution connue consiste à utiliser une couche de ferrite entre l'antenne et la feuille de métal. Bien que simple, cette solution rend la fabrication de la carte complexe et la carte ne peut communiquer avec le lecteur interrogateur que d'un seul côté.

Une autre solution pertinente consiste à utiliser une antenne de taille réduite insérée à l'intérieur ou en superposition avec une cavité (absence de métal) réalisée dans une feuille de métal, la cavité étant reliée au bord extérieur de la couche de métal au moyen d'une fente. Dans cette configuration, la couche métallique entoure l'antenne NFC et présente donc une surface physique plus grande que celle de l'antenne et occupe généralement la totalité de la taille de la carte.

Les lignes de champ magnétique étant des lignes fermées, le champ magnétique d'interrogation incident sur la couche métallique environnante, dans une telle topologie, sera donc détourné du métal: les lignes de champ magnétique à la périphérie du métal seront détournées vers l'extérieur tandis que les lignes proches de la cavité seront détournées vers l'intérieur, traversant ainsi la zone de l'antenne et s'ajoutant au flux magnétique normal traversant l'antenne, rendant sa zone effective plus grande que dans le cas où elle aurait été utilisée sans ce métal environnant.

Bien que la technologie décrite ci-dessus présente un bon comportement NFC, elle peut souffrir d'une limitation technique inhérente à sa topologie. En effet, la carte fournit des performances analogues à celles d'une antenne ISO 14443 de classe 2 ou même plus petite (classes supérieures), c'est-à-dire des valeurs de modulation de charge médiocres et un niveau de champ de seuil d'activation relativement élevé, ce qui limite les performances d'interopérabilité de ces cartes avec les différents lecteurs de cartes NFC. Plus généralement, dans une telle topologie, la zone d'insertion de l'antenne est compromise par l'intégrité mécanique de la carte qui est directement liée à la zone de la cavité : plus la cavité est petite, meilleur est le comportement mécanique de la carte et plus modeste est le comportement RF et vice versa.

La demande de brevet FR 3 131 034 A1 décrit une carte à puce fonctionnant à la fois en mode contact et en mode sans contact. Cette carte à puce comprend deux antennes couplées par induction et disposées de chaque côté d'une couche métallique. L'une des antennes est positionnée côté recto de la carte à puce et l'autre est positionnée côté verso de la carte sur une couche plastique, ceci afin de palier au parasitage induit par la couche métallique sur le signal émis. Le couplage par induction des deux antennes peut cependant entrainer des pertes sur l'énergie du signal émis. Il existe donc un besoin d'améliorer la puissance du signal émis dans le contexte des cartes à puce métallique.

La demande de brevet US2021/081748 A1 décrit une carte à puce en métal comprenant une cavité et une jonction vers le bord de la carte, un premier ensemble de spires et un second ensemble de spires le long des bords de ladite cavité.

### Exposé de l'invention

La présente invention concerne une carte à puce comprenant :
- un corps de carte formé au moins en partie par une couche métallique ladite couche métallique comprenant une zone d'évidement formée d'une cavité et une jonction reliant la cavité à un bord périphérique de la carte à puce;
- un module électronique comprenant une puce RF ;
- au moins une antenne RF connectée électriquement à la puce RF par une connexion physique conductrice, l'antenne étant disposée sur une couche non conductrice déposée sur la couche métallique, la puce RF étant disposée au niveau de la couche métallique et comprenant
   - un premier ensemble de spires routé le long du pourtour de la carte, cet ensemble comprenant au moins une spire se déployant vers l'intérieur de la carte, et connecté électriquement à
   - un second ensemble de spires routé à l'extérieur de ladite cavité, le long des bords de ladite cavité,
- les spires des deux ensembles de spires étant disposées de sorte que le courant circule dans le même sens dans le premier ensemble de spires et dans le second ensemble de spires.

Ainsi, avantageusement, par rapport à la demande de brevet FR 3 131 034 A1, le fait de n'avoir qu'une seule antenne présente sur une seule face de la carte peut avantageusement permettre de réduire les pertes d'énergie induites par le couplage nécessaire lors de la présence de deux antennes, permettant d'obtenir ainsi une intensité du signal plus forte. De plus une telle configuration limite les distorsions de phase, car le signal est transmis directement du fil d'antenne à la puce (il n'y a pas de couplage réactif par induction). Cette distorsion de phase présente une complexité pour la puce au niveau de la démodulation du signal reçu qui entraîne des erreurs de communications avec le lecteur voire une perte totale de la communication

Selon certains modes de réalisation, des courants de Foucault sont produits sous l'effet d'un champ magnétique incident auquel est soumise la carte, les spires du premier ensemble de spires et les spires du second ensemble de spires étant enroulées de manière à ce que ledit courant et les courants de Foucault circulent dans le même sens dans le second ensemble de spires, et en phase avec le champ magnétique incident.

Selon certains modes de réalisation, ledit module électronique est positionné dans ladite cavité.

Selon certains modes de réalisation, le centre de ladite cavité est situé au centre géométrique de la carte à puce.

Selon certains modes de réalisation, ladite cavité est de forme arrondie ou rectangle et centrée sur le centre de la carte à puce.

Selon certains modes de réalisation, ladite cavité est de forme arrondie, centrée sur le centre de la carte à puce et de diamètre 20mm.

Selon certains modes de réalisation, la surface de ladite cavité représente une surface sensiblement égale à 1,5% de la surface de la couche métallique.

Selon certains modes de réalisation, la cavité comprend un matériau diélectrique choisi parmi du bois, ou de la céramique, ou du caoutchouc rigide.

Selon certains modes de réalisation, le format de la carte à puce est conforme au format ID1.

Selon un autre aspect, la présente invention concerne un procédé de fabrication d'une carte à puce à partir d'un corps de carte formé au moins en partie par une couche métallique
- formation dans ladite couche métallique d'au moins une zone évidement formée d'une cavité reliée par une jonction à un bord périphérique de la carte à puce,,
- assemblage d'un module électronique comprenant une puce RF,
- dépôt d'au moins de deux couches isolantes de part et d'autre de la couche métallique,
- formation d'une antenne connectée électriquement à la puce RF par une connexion physique conductrice sur l'une des dites couches isolantes comprenant
   - un premier ensemble de spires routé le long du pourtour de la carte, cet ensemble comprenant au moins une spire se déployant vers l'intérieur de la carte, et connecté électriquement à
   - un second ensemble de spires routé à l'extérieur de ladite cavité, le long des bords de ladite cavité,
- les spires des deux ensembles de spires étant disposées de sorte que le courant circule dans le même sens dans le premier ensemble de spires et dans le second ensemble de spires.

D'autres caractéristiques et avantages de la présente invention ressortiront de la description faite ci-dessous, en référence aux dessins annexes qui en illustrent un exemple de réalisation dépourvu de tout caractère limitatif.

### Brève description des dessins

[Fig. 1a] La figure 1a représente une vue de profil des couches d'une carte à puce assemblées selon le mode de réalisation de l'invention de la figure 1b,
[Fig. 1b] La figure 1b représente une vue de face d'une carte à puce selon certains modes de réalisation de l'invention,
[Fig. 2a] La figure 2a représente une vue de face d'une carte à puce fonctionnant sans contact selon un mode de réalisation de l'invention,
[Fig. 2b] La figure 2b représente une vue de face d'une carte à puce fonctionnant sans contact selon un mode de réalisation de l'invention,
[Fig. 3a] La figure 3a représente une vue de face d'une carte à puce fonctionnant sans contact selon un mode de réalisation de l'invention,
[Fig. 3b] La figure 3b représente une vue de face d'une carte à puce fonctionnant sans contact selon un mode de réalisation de l'invention,
[Fig. 4] La figure 4 représente les courants circulant sur la carte selon un mode de réalisation de la présente invention.
[Fig. 5] La figure 5 représente un procédé de fabrication d'une carte à puce selon certains modes de réalisation de l'invention.

### Description des modes de réalisation

L'invention porte sur des cartes à puce métalliques configurées pour fonctionner en mode sans contact, et concerne également un procédé de fabrication de telles cartes à puce. Une « carte à puce métallique » désigne dans le présent document une carte à puce comprenant un métal ou une combinaison (alliage) de métaux, par exemple sous la forme d'une couche métallique ou d'une pluralité de couches métalliques.

Comme indiqué précédemment, une carte à puce sans contact est configurée par nature pour communiquer en sans contact avec l'extérieur, plus particulièrement avec un lecteur NFC externe. A cet effet, une carte à puce sans contact embarque une antenne radiofréquence (RF) pour échanger (recevoir et/ou émettre) des signaux RF avec un lecteur NFC externe. Une telle carte à puce peut en outre avoir la capacité de fonctionner aussi en mode avec contact, en utilisant des contacts externes prévus à cet effet à la surface de la carte : on parle alors de cartes « dual » (ou cartes à double interface de communication), ces cartes étant ainsi capable de fonctionner en mode sans contact et en mode avec contact.

Il existe aujourd'hui une forte demande chez les utilisateurs pour des cartes à puce métalliques, pour notamment les raisons évoquées précédemment (aspects esthétiques, impression de qualité, prestige...). Il est en particulier souhaitable de produire des cartes à puce dont l'essentiel (ou une part importante) du corps de carte est en métal, ou du moins dont le corps de carte comporte une plaque métallique (ou couche métallique), afin d'obtenir une certaine uniformité et qualité dans l'aspect visuel et esthétique de la carte.

On considère dans les exemples qui suivent que la carte à puce est une carte bancaire, telle qu'une carte de paiement par exemple. Cette carte à puce peut être conforme à la norme ISO 7816 et peut fonctionner selon le standard EMV, bien que ni l'un ni l'autre de ces aspects ne soit obligatoire pour mettre en œuvre l'invention. Plus généralement, l'invention s'applique à une quelconque carte à puce métallique configurée pour mettre en œuvre une transaction en mode sans contact, y compris des cartes EMV ou des cartes à puce utilisant un autre standard de transaction, par exemple le standard NFC (selon par exemple ISO14443-2 , ISO 10373-6, ISO 15693, « EMV Contactless Certification »). De façon générale, la carte à puce de l'invention peut être configurée pour réaliser une transaction d'un type quelconque, telle que des transactions bancaires (transactions de paiement, de transfert, de débit...), des transactions d'authentification, etc.

Sauf indications contraires, les éléments communs ou analogues à plusieurs figures portent les mêmes signes de référence et présentent des caractéristiques identiques ou analogues, de sorte que ces éléments communs ou analogues ne sont généralement pas à nouveau décrits par souci de simplicité.

Les termes « premier(s) » (ou première(s)), « deuxième(s) », etc.) sont utilisés dans ce document par convention arbitraire pour permettre d'identifier et de distinguer différents éléments (tels que des clés, des dispositifs, etc.) mis en œuvre dans les modes de réalisation décrits ci-après.

Dans les exemples donnés, la carte à puce est au format ID1 d'une carte de crédit, bien que d'autres formes soient envisageables pour mettre en œuvre l'invention.

Une carte au format ID1 a pour dimensions 85,60 mm× 53,98 mm× 0,76 mm.

Dans d'autres modes de réalisation, la carte a un format inférieur au format ID1 et peut par exemple être adaptée à des cartes utilisées dans le domaine de l'automobile.

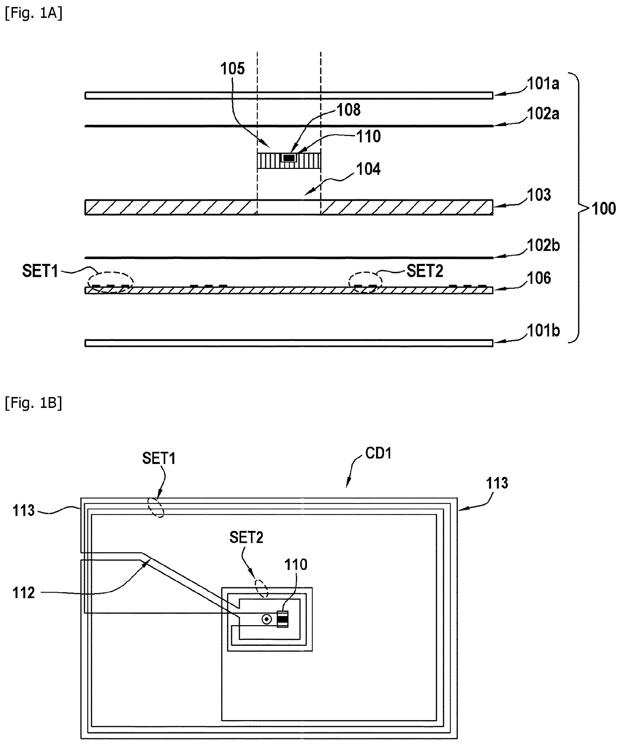

**Les** **figures 1a et 1b** représentent respectivement une vue de face et une vue éclatée d'une carte à puce 1 selon certains modes de réalisation de l'invention.

La carte CD1 comprend une couche métallique 103 comprenant une zone d'évidement (absence de métal, ou cavité) 104 dans laquelle se loge (est inséré) un substrat 105. La couche métallique couvre la surface totale de la carte CD1. Un matériau diélectrique, ou substrat, est utilisé pour remplir la cavité. Ce matériau peut être la résine utilisée pour coller les couches entre-elles, et notamment pour coller la couche métallique à ses couches adjacentes. Selon d'autres modes de réalisation, ce matériau peut également être un matériau permettant de rigidifier l'ensemble, tel que des céramiques diélectriques, des matériaux à base de pierre ou de bois. Ce matériau peut également être un matériau transparent, par exemple un verre trempé ou du polycarbonate, de façon à permettre de voir à travers la carte.

La zone d'évidement 104 est une ouverture ou zone traversante ménagée dans la couche métallique 103. La forme et les dimensions de cette zone d'évidemment 104 peuvent être adaptées selon le cas comme illustré dans les figures suivantes. La cavité peut avoir une forme régulière telle qu'un rectangle, un cercle ou toute autre forme géométrique, régulière ou irrégulière.

Selon certains modes de réalisation, la cavité peut être de forme ronde et de diamètre égal à 1cm. Selon certains modes de réalisation, la surface de la cavité peut représenter environ 1,5% de la surface métallique.

Le centre de la cavité est de préférence situé au centre géométrique de la carte à puce comme dans les standards EMVCO pour les cartes de type ID1. Ceci permet avantageusement d'améliorer l'homogénéité de la structure de la carte et d'en améliorer par conséquent sa robustesse ou solidité. La cavité peut cependant être excentrée selon la largeur ou la longueur de la carte, ce qui peut être intéressant lorsque les tags RFID prennent des formes géométriques irrégulières.

La couche métallique 103 peut être constituée d'un seul métal, tel que de l'acier inoxydable, de l'inox, de l'aluminium, du cuivre, de l'or, par exemple, ou d'un alliage de plusieurs métaux différents ou tout autre matériau plaqué par une couche métallique épaisse résonnant à la fréquence HF RFID (bande 13,56 MHz). La couche métallique 103 peut comprendre une pluralité de sous-couches métalliques.

La carte à puce CD1 comprend également deux couches de résine diélectrique 102a et 102b qui permettent d'isoler la couche métallique 103 des autres couches de la carte et notamment qui permettent de consolider la carte à puce CD1 et souder/coller la couche métallique à ses éventuelles couches adjacentes inférieures et supérieures.

Une antenne RFID est implémentée sur une couche physique, séparée 106, parallèle au plan qui comprend la couche métallique 103. La couche 106 peut être une couche réalisée en polycarbonate (PC), en PolyChlorure de Vinyle (PVC), en Polytéréphtalate d'éthylène (PET) ou d'autres dérivés du plastique utilisés dans le domaine de la carte à puce. Dans les figures suivantes, dans lesquelles les couches n'apparaissent pas, l'antenne est également implantée dans la couche 106.

La couche métallique 103 est isolée électriquement de l'antenne par la couche adjacente 102b. L'antenne AT1 comprend une pluralité de spires dont une vue de face, plus explicite sera décrite en référence à **la** **figure 1b****.**

La carte à puce CD1 comprend également une première couche en matériau plastique 101a et une seconde couche plastique 101b, dont l'un des objectifs est de venir protéger les couches internes de la carte à puce CD1. Les couches 101a et 101b, optionnelles, sont par exemple réalisées en polycarbonate et préférentiellement transparentes. Ces couches peuvent notamment être présentes pour des raisons esthétiques, par exemple pour permettre des impressions sur la carte et/ou pour des raisons de sécurité nécessaires dans le domaine des cartes à puce et notamment les documents de sécurité. Des couches supplémentaires, habituellement des couches plastiques, peuvent être rajoutées suivant les besoins des concepteurs de carte à puce.

La carte à puce comprend également une puce électronique RF 110. On considère que la puce RF 110 est comprise (ou embarquée) dans un module électronique 111, ce dernier étant inséré dans le corps de carte 100. Le module électronique 111 est par exemple positionné dans une cavité 108 ménagée dans la zone d'évidement 104, ou plus précisément dans le substrat 105 compris dans la zone d'évidement 104, destinée à accueillir le module électronique 111. Ainsi, la puce RF 110 est positionnée dans la zone d'évidemment 104. Selon d'autres modes de réalisation, la puce 110 n'est pas insérée dans une cavité 108 mais positionnée au-dessus (en regard) du substrat 105. A noter toutefois que divers aménagements de la puce RF 110 sont possibles. Des variantes sont notamment possibles dans lesquelles la puce RF 110 n'est pas disposée dans, ou en regard de, la zone d'évidemment 110.

La carte à puce comprend en outre une antenne HF RFID disposée sur la couche 106 et comprenant deux enroulements STE1 et SET2 décrits ultérieurement en regard de la figure 1b.

Selon un exemple particulier, le corps de carte 100 et plus généralement la carte à puce CD1 est dépourvue de ferrite, ce qui permet de simplifier la fabrication de la carte.

**La** **figure 1b** représente une vue de face de la carte CD1, par exemple lorsque l'on regarde la carte au-dessus de la couche 101a.

Une fente 112 relie la cavité à un bord périphérique du cadre métallique 113 (bord de la couche métallique 103). Cette fente 112 est présente sur la carte représentée en figure 1 mais non visible sur une vue en coupe. Plus précisément, cette fente 112, qui constitue également une seconde zone d'évidement, constitue un raccordement entre le bord extérieur de la carte et la zone d'évidement 104. Le cadre métallique 113 suit la forme de la fente pour rejoindre le bord de la cavité 104. En d'autres mots, la couche métallique est présente sur toute la surface de la carte, hormis les surfaces de la cavité 104 et de la fente 112.

L'antenne HF RFID est routée de manière à ce qu'elle comprenne deux ensembles de spires SET1 et SET2 tels que
- le premier ensemble SET1 est routé en périphérie extérieure de la carte CD1, le long du bord métallique de la carte, cet ensemble comprend au moins une spire qui ensuite rejoint ou encore se déploie vers l'intérieur de la carte
- le second ensemble SET2 est routé en périphérie extérieure de la cavité et comprend au moins une spire qui se déploie autour de la cavité, ou autrement dit sur le bord extérieur de la cavité
- les deux ensembles SET1 et SET2 étant connectés électriquement
- les spires étant disposées ou encore enroulées, de sorte que le courant circule dans le même sens dans le premier ensemble et dans le second ensemble.

Autrement dit, l' antenne RF est connectée électriquement à la puce RF par une connexion physique conductrice et l'antenne est disposée sur une couche non conductrice déposée sur la couche métallique, la puce RF étant disposée au niveau de la couche métallique et comprend
- un premier ensemble de spires SET1 routé le long du pourtour de la carte, cet ensemble comprenant au moins une spire se déployant vers l'intérieur de la carte, et connecté électriquement à
- un second ensemble de spires SET2 routé à l'extérieur de la cavité, le long des bords de la cavité,
- les spires des deux ensembles de spires étant disposées de sorte que le courant circule dans le même sens dans le premier ensemble de spires et dans le second ensemble de spires.

Selon certains modes de réalisation, la distance entre la spire la plus extérieure de la carte et le bord de la carte est comprise entre 100 et 200 µm.

Selon certains modes de réalisation, la spire de l'enroulement SET2, la plus proche de la cavité est positionnée le plus proche possible selon les tolérances de positionnement des couches.

Les enroulements des antennes sont physiquement situés sur une couche non conductrice 106 et non pas sur la couche métallique 103. En d'autres termes, le second ensemble SET2 est routé sur la zone de la couche non conductrice 106 située en périphérie extérieure de la cavité, la cavité étant située dans la couche métallique située sous la couche non conductrice.

L'antenne RFID HF est connectée à la puce par des techniques bien connues de l'homme du métier et non détaillées ici. Plus précisément la puce électronique est connectée d'une part à l'extrémité de la spire la plus extérieure à la carte CD1, de l'ensemble de spires SET1, et d'autre part à l'extrémité de la spire la plus proche du bord de la cavité de l'ensemble de spires SET2.

Comme illustré sur **les** **figures 1a et 1b****,** la carte à puce CD1 comprend deux ensembles de spires tels que
- le premier ensemble SET1 est routé en périphérie extérieure de la carte CD1, le long du bord métallique de la carte, cet ensemble comprend au moins une spire qui ensuite rejoint ou encore se déploie vers l'intérieur de la carte
- le second ensemble SET2 est routé en périphérie extérieure de la cavité et comprend au moins une spire qui se déploie autour de la cavité
- les deux ensembles SET1 et SET2 étant connectés électriquement
- les spires étant disposées ou encore enroulées, de sorte que le courant circule dans le même sens dans le premier ensemble et dans le second ensemble.

Une fente 112 relie la cavité 104 à un bord périphérique du cadre métallique 113. Plus précisément, cette fente 112, telle que décrite précédemment, est dans ce mode de réalisation, parallèle au bord le plus grand de la carte et centré par rapport aux deux bords de la carte. Selon une variante, la fente est parallèle au bord le plus petit de la carte et centré par rapport aux deux bords de la carte. Selon d'autres modes de réalisation, pouvant également s'appliquer aux modes de réalisation décrits dans les autres figures, la fente peut suivre un autre tracé sur la carte, tout routage géométrique pouvant être envisagé.

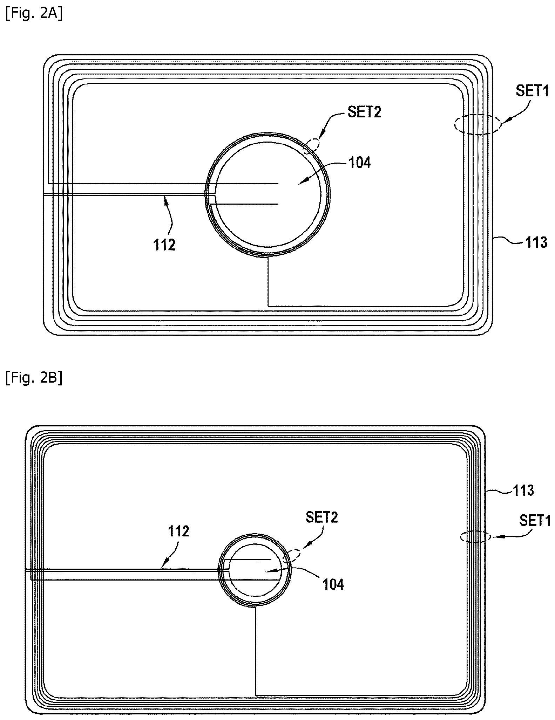

**Les** **figures 2** à 4 représentent différents modes de réalisation de la présente invention en proposant différentes formes de cavité 104.

**La** **figure 2a** représente un mode de réalisation de carte à puce sans contact. La puce RF 110 est située dans la cavité et plus précisément au centre (ou substantiellement au centre) de la cavité 104.

La cavité 104 est de forme circulaire et centrée sur la carte et son diamètre est de 20 mm.

Une fente 112 relie la cavité 104 à un bord périphérique du cadre métallique 113. Plus précisément, cette fente 112, telle que décrite précédemment, est dans ce mode de réalisation, parallèle au bord le plus grand de la carte et centré par rapport aux deux bords de la carte. Selon une variante, la fente est parallèle au bord le plus petit de la carte et centré par rapport aux deux bords de la carte. Comme mentionné précédemment, la fente 112 peut suivre n'importe quel tracé géométrique permettant de relier la cavité 104 au bord métallique de la carte.

Comme mentionné précédemment, la carte à puce CD1 comprend deux ensembles de spires tels que
- le premier ensemble SET1 est routé en périphérie extérieure de la carte CD1, le long du bord métallique 113 de la carte, cet ensemble comprend au moins une spire qui ensuite rejoint ou encore se déploie vers l'intérieur de la carte
- le second ensemble SET2 est routé en périphérie extérieure de la cavité 104 et comprend au moins une spire qui se déploie autour de la cavité 104
- les deux ensembles SET1 et SET2 étant connectés électriquement
- les spires étant disposées ou encore enroulées, de sorte que le courant circule dans le même sens dans le premier ensemble et dans le second ensemble.

**La** **figure 2b** représente un mode de réalisation de carte à puce sans contact. La puce RF 110 est située dans la cavité et plus précisément au centre (ou substantiellement au centre) de la cavité 104.

La cavité 104 est de forme circulaire et centrée sur la carte et son diamètre est de 10 mm.

Une fente 112 relie la cavité 104 à un bord périphérique du cadre métallique 113. Plus précisément, cette fente 112, telle que décrite précédemment, est dans ce mode de réalisation, parallèle au bord le plus grand de la carte et centré par rapport aux deux bords de la carte. Selon une variante, la fente est parallèle au bord le plus petit de la carte et centré par rapport aux deux bords de la carte. Comme mentionné précédemment, la fente 112 peut suivre n'importe quel tracé géométrique permettant de relier la cavité 104 au bord métallique de la carte.

Comme mentionné précédemment, la carte à puce CD1 comprend deux ensembles de spires tels que
- le premier ensemble SET1 est routé en périphérie extérieure de la carte CD1, le long du bord métallique 113 de la carte, cet ensemble comprend au moins une spire qui ensuite rejoint ou encore se déploie vers l'intérieur de la carte
- le second ensemble SET2 est routé en périphérie extérieure de la cavité 104 et comprend au moins une spire qui se déploie autour de la cavité 104
- les deux ensembles SET1 et SET2 étant connectés électriquement
- les spires étant disposées ou encore enroulées, de sorte que le courant circule dans le même sens dans le premier ensemble et dans le second ensemble.

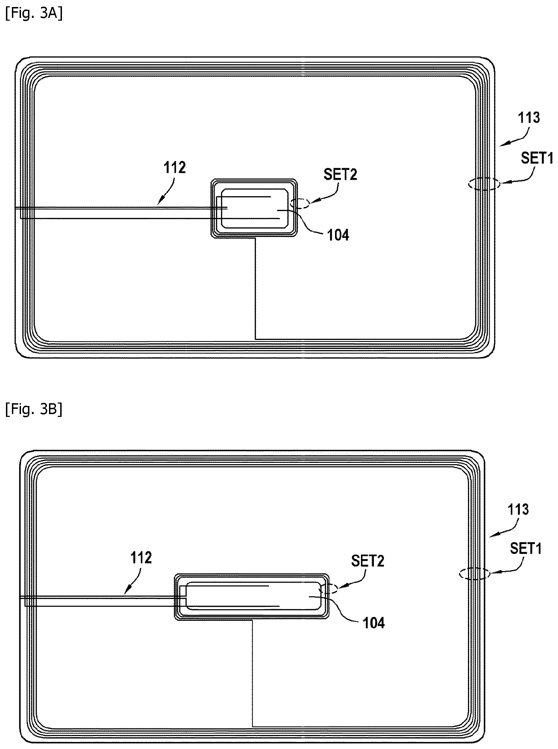

**La** **figure 3a** représente un mode de réalisation de carte à puce sans contact. La puce RF 110 est située dans la cavité et plus précisément au centre (ou substantiellement au centre) de la cavité 104.

La cavité 104 est de forme rectangle et centrée sur la carte. Sa largeur est de 7 mm et sa longueur est de 12 mm. Elle s'étend parallèlement aux bords de la carte à puce CD1, sa longueur étant dans l'axe de la longueur de la carte à puce.

Une fente 112 relie la cavité 104 à un bord périphérique du cadre métallique 113. Plus précisément, cette fente 112, telle que décrite précédemment, est dans ce mode de réalisation, parallèle au bord le plus grand de la carte et centré par rapport aux deux bords de la carte. Selon une variante, la fente est parallèle au bord le plus petit de la carte et centré par rapport aux deux bords de la carte. Comme mentionné précédemment, la fente 112 peut suivre n'importe quel tracé géométrique permettant de relier la cavité 104 au bord métallique de la carte.

Comme mentionné précédemment, la carte à puce CD1 comprend deux ensembles de spires tels que
- le premier ensemble SET1 est routé en périphérie extérieure de la carte CD1, le long du bord métallique 113 de la carte, cet ensemble comprend au moins une spire qui ensuite rejoint ou encore se déploie vers l'intérieur de la carte
- le second ensemble SET2 est routé en périphérie extérieure de la cavité 104 et comprend au moins une spire qui se déploie autour de la cavité 104
- les deux ensembles SET1 et SET2 étant connectés électriquement
- les spires étant disposées ou encore enroulées, de sorte que le courant circule dans le même sens dans le premier ensemble et dans le second ensemble.

**La** **figure 3b** représente un mode de réalisation de carte à puce sans contact. La puce RF 110 est située dans la cavité et plus précisément au centre (ou substantiellement au centre) de la cavité 104.

La cavité 104 est de forme rectangle et centrée sur la carte. Sa largeur est de 5mm et sa longueur est de 25 mm. Elle s'étend parallèlement aux bords de la carte à puce CD1, sa longueur étant dans l'axe de la longueur de la carte à puce.

Une fente 112 relie la cavité 104 à un bord périphérique du cadre métallique 113. Plus précisément, cette fente 112, telle que décrite précédemment, est dans ce mode de réalisation, parallèle au bord le plus grand de la carte et centré par rapport aux deux bords de la carte. Selon une variante, la fente est parallèle au bord le plus petit de la carte et centré par rapport aux deux bords de la carte. Comme mentionné précédemment, la fente 112 peut suivre n'importe quel tracé géométrique permettant de relier la cavité 104 au bord métallique de la carte.

Comme mentionné précédemment, la carte à puce CD1 comprend deux ensembles de spires tels que
- le premier ensemble SET1 est routé en périphérie extérieure de la carte CD1, le long du bord métallique 113 de la carte, cet ensemble comprend au moins une spire qui ensuite rejoint ou encore se déploie vers l'intérieur de la carte
- le second ensemble SET2 est routé en périphérie extérieure de la cavité 104 et comprend au moins une spire qui se déploie autour de la cavité 104
- les deux ensembles SET1 et SET2 étant connectés électriquement
- les spires étant disposées ou encore enroulées, de sorte que le courant circule dans le même sens dans le premier ensemble et dans le second ensemble.

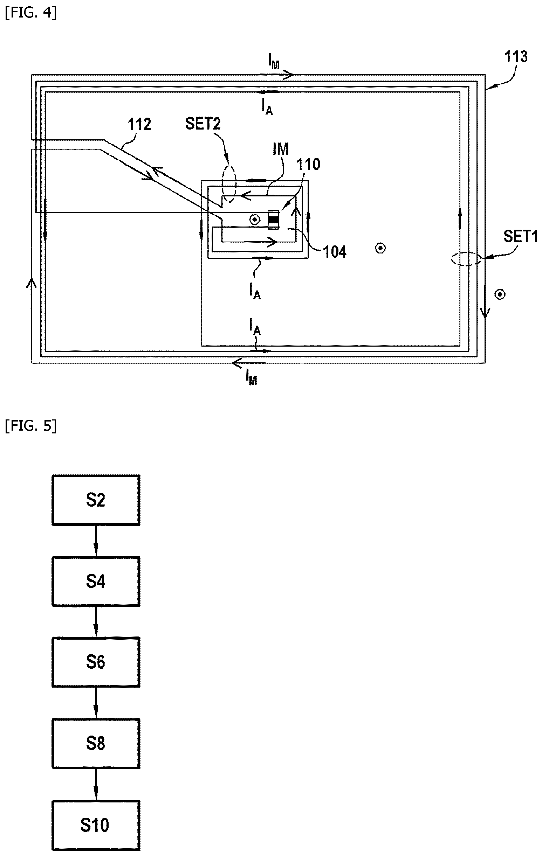

**La** **figure 4** illustre la circulation des courants sur une carte à puce CD1 telle que décrite dans les modes de réalisation des figures précédentes.

Des courants de Foucault sont produits sous l'effet d'un champ magnétique FL1 auquel est soumis la carte à puce. Un tel champ magnétique est généré dans cet exemple (**figure 1b**) par un terminal externe T1 avec lequel la carte à puce CD1 coopère en mode sans contact. Lorsque la carte à puce CD1 est exposée au champ magnétique FL1, des courants de Foucault circulent sous la forme de boucles de courant (boucles primaires et boucles secondaires) en surface de la couche métallique 103. Le phénomène de la formation des courants de Foucault est connu de l'homme du métier et ne sera donc pas décrit en détail dans ce document.

Les courants de Foucault circulent dans des boucles fermées. La boucle la plus extérieure par rapport au centre de la carte, de l'ensemble de spires SET2, est la boucle la plus longue et donc la plus dominante en terme d'énergie véhiculée.

Sur **la** **figure 4****,** on suppose que le champ magnétique généré par le terminal T1 est perpendiculaire à la carte et dirigé de l'arrière vers l'avant de la carte, la carte étant représentée vue par sa face avant.

Lorsque la carte est placée dans le champ électromagnétique d'un lecteur RFID HF qui l'interroge (fonctionnant dans la bande de fréquence RFID de 13,56 MHz), des courants de Foucault se forment sur la surface métallique, en tant qu'effet de réaction s'opposant au champ magnétique appliqué. Les courants de Foucault circulent dans des boucles fermées, la boucle la plus extérieure (la plus grande) correspondant au plus long trajet des courants de Foucault est la boucle la plus importante en terme d'énergie transportée.

Dans la présente invention, en raison des boucles d'enroulement de l'ensemble SET1 de l'antenne qui font face à la périphérie extérieure de la couche métallique, comme ces traces sont parallèles à la couche métallique, un courant électrique image I_{A} se forme dans ces boucles. Si l'on considère le schéma conceptuel de **la** **figure 4****,** les courants de Foucault sont représentés par les flèches I_{M} montrant la boucle de courant I_{M} la plus extérieure sur le cadre métallique. Les flèches I_{A} représentent le courant électrique image I_{A} dans l'antenne. Comme représenté sur la **figure 4****,** le courant induit circule de l'ensemble de spires SET2 situé sur la périphérie externe de la carte vers l'ensemble de spires SET1 situé sur la périphérie extérieure à la cavité 104. Comme illustré, le courant induit circule des boucles les plus externes (ensemble 1) vers les boucles les plus internes (ensemble 2) qui encerclent la zone de la cavité sans métal.

Les spires de l'ensemble SET2 et SET1 sont enroulées de manière à ce que le courant image IA et les courants de Foucault IM, circulent dans le même sens dans l'enroulement SET2, en phase avec le champ magnétique incident, comme illustré sur **la** **figure 4****.** Ceci est notamment rendu possible par la présence du cadre métallique 113 le long de la fente 112, qui relie le cadre métallique situé sur le bord extérieur de la carte au cadre métallique situé en périphérie de la cavité 104.

En prenant comme hypothèse que le champ magnétique suit la direction mentionnée précédemment, le courant IA circulant dans les spires de l'ensemble SET1 et SET2 de l'antenne circule dans le sens opposé aux aiguilles d'une montre, dans la même direction, sous réserve que les spires des ensembles SET1 et SET2 soient enroulées dans la même direction. Le courant de Foucault dominant, dans la spire la plus extérieure (donc la plus proche du cadre métallique en périphérie extérieure de la carte), s'oppose au champ magnétique incident, et circule donc dans le sens des aiguilles d'une montre à travers le haut, le bas la gauche et la droite du cadre métallique, dans l'ensemble de spires SET1, mais circule dans le sens opposé aux aiguilles d'une montre dans les spires de l'ensemble SET2. Ainsi, en proximité de la cavité 104, où se situe la puce RF, l'énergie est rendue plus importante qu'ailleurs sur la carte grâce à l'énergie du courant électrique IA, des courants de Foucault en périphérie de la carte circulant sur l'ensemble SET1, des courants de Foucault proches de la cavité circulant sur l'ensemble SET2, et l'énergie induite par le champ magnétique circulant à l'intérieur de la cavité, toutes s'ajoutant en étant en phase. Ainsi, l'énergie disponible peut-être plus importante dans la cavité, donc au niveau de la puce RF 110, que sur le reste de la carte à puce facilitant ainsi le couplage entre la carte à puce et le terminal extérieur T1 et ainsi la communication entre la carte à puce et le terminal T1.

Nous devons fournir l'énergie récoltée à la puce RF en essayant de récolter le maximum d'énergie possible. En effet, la seule source d'énergie de la carte provient du champ magnétique du lecteur interrogateur. Cette énergie a une amplitude et une phase. Une partie de ce champ magnétique incident sur la carte traverse directement la cavité et la phase de cette énergie est un paramètre important à prendre en compte.

De plus, il est également important de réduire les pertes. La présente divulgation étant basée sur la topologie de l'antenne et la récolte d'énergie à partir des courants de Foucault sur la plaque métallique, la minimisation de pertes d'énergie se fait par un routage pertinent des ensembles/boucles d'antennes de telle sorte que l'énergie récoltée par ces boucles soit plus importante que les pertes ohmiques intrinsèques des fils. Un autre paramètre pour minimiser les pertes est de maintenir l'énergie récoltée en phase avec celle de la source, c'est-à-dire le champ magnétique de l'interrogateur à travers la zone de la cavité.

Il faut noter que les boucles des courants de Foucault sont partout sur la couche métallique, formant de grandes et de petites boucles. Plus une boucle est grande, plus son énergie est importante.

Un ensemble de boucles de courants de Foucault, qui n'est pas représenté sur la figure, encercle la cavité en opposition de phase avec le champ magnétique incident: cela signifie qu'il existe un ensemble de boucles de courants de Foucault autour de la cavité (sans tenir compte de la fente étroite), avec une direction de courant électrique dans le sens des aiguilles d'une montre. La zone de la cavité étant la référence de ce bilan énergétique à travers la carte et étant en fait la principale région où l'énergie passe d'un domaine à l'autre, il y a une forte concentration de courant dans cette zone : partout où il y a une transition d'un domaine énergétique à un autre, il y a une forte concentration de courant. Par domaine énergétique, nous entendons : le domaine énergétique qui est en phase avec la source d'énergie incidente (y compris la partie directement incidente de la source) et le domaine énergétique qui est déphasé (déphasage de 180 degrés), ce dernier étant lié à l'effet de réaction des courants de Foucault. Il est donc primordial de collecter l'énergie de ces courants de Foucault et de la mettre en phase avec le système d'acheminement des antennes au moyen du deuxième ensemble de boucles autour de la cavité. Cela satisfait aux deux conditions mentionnées ci-dessus. En fait, si nous imaginons l'ensemble des boucles autour de la cavité comme le montre la figure 4 et, par hypothèse, les considérons comme n'étant pas en contact direct avec le métal de la plaque métallique, mais dans la zone sans métal (la cavité), les boucles comme indiqué dans la figure 4 sont beaucoup plus efficaces que de les avoir dans la cavité.

Le routage de l'antenne à travers ces deux séries de boucles, ainsi que la présence d'une fente s'ouvrant sur la cavité garantit que le courant induit (IA) qui circule dans les boucles SET2 et le courant de Foucault à la périphérie de la cavité sont dans la même direction, tous deux en phase avec le champ magnétique incident.

Afin de consolider la carte mécaniquement, il peut être envisagé de remplir la cavité avec un matériau diélectrique robuste tel que le bois, la céramique, du caoutchouc rigide.

Lors de tests effectués sur les différentes formes de cavité, on constate que le mode de réalisation de **la** **figure 3a****,** dans lequel la cavité est ronde, de diamètre 20 mm et centrée sur le centre géométrique de la carte, présente les meilleurs résultats, en permettant d'obtenir pour un champ magnétique de 0.75 A/m, une modulation de charge supérieure à celle demandé par la norme. La modulation de charge obtenue pour un champ magnétique de 0.75 A/m est de 377 mV environ, la valeur exigée par la norme étant de 25 mV.

Les modes de réalisation décrits dans **les** **figures 3b****, 4a et 4b** ne peuvent pas permettre d'obtenir des valeurs de modulation de charge aussi importante quel que soit la valeur du champ magnétique. Le mode de réalisation de **la figure 4b** dans lequel la cavité est rectangulaire, centrée sur le centre géométrique de la carte et de dimension 5mm par 25 mm, la longueur de la cavité étant dans le même axe que la longueur de la carte, peut permettre d'atteindre des résultats inférieurs à celui de **la** **figure 3a** mais supérieur aux autres. Ensuite dans l'ordre de performance, vient le mode de réalisation de **la** **figure 3b** puis celui de **la figure 4a.** Cependant tous les modes de réalisation permettent d'obtenir des résultats nettement supérieurs à ceux exigés par la norme ISO 14443-2

On peut donc constater que la carte implémentant l'un quelconque des modes de réalisation de la présente invention peut permettre d'une part de déclencher une activation de la carte très rapidement et d'autre part avec une amplitude de modulation très grande et ainsi d'apporter des performances supérieures aux solutions de l'état de l'art.

**La** **figure 5** représente schématiquement un procédé de fabrication d'une carte à puce CD1 selon certains modes de réalisation de l'invention. La description ci-avant de la carte à puce CD1 selon divers modes de réalisation en référence aux **figures 1-4** s'applique par analogie au procédé de fabrication illustré en **figure 5****.**

Au cours d'une étape S2 de fourniture, on forme (ou fournit) un corps de carte 100 comprenant une couche métallique 103 comme précédemment décrite. En particulier, ce corps de carte 100 est formé au moins en partie par une couche métallique 103, cette couche métallique 103 comprenant une zone d'évidement 104 débouchant sur un bord périphérique de la couche métallique par l'intermédiaire d'une jonction 112, comme déjà décrit. En particulier, un cadre métallique est formé par la couche métallique 103 sur le bord de la carte, de la jonction et de la cavité, formant un bord métallique continu entourant le bord périphérique, la jonction et la cavité.

Selon une variante, deux zones d'évidement 104 et 104' peuvent être formées dans la couche métallique 103, seule la zone d'évidement 104 débouchant sur le bord périphérique de la couche métallique 103 par l'intermédiaire de la jonction 112. La seconde cavité 104' pouvant être destinée à loger une puce RF.

Selon une variante, le module électronique n'est pas positionné dans une cavité.

Au cours d'une étape S4, un module électronique RF est implanté soit dans la cavité 104, soit en dehors d'une cavité.

Lors d'une étape S6, des couches isolantes 102a et 102b sont déposées de part et d'autre de la couche métallique 103 afin d'isoler la couche métallique des autres couches non conductrices de la carte. Une couche 106 est également déposée sur l'une des couches 102b ou 102a telle une couche réalisée en polycarbonate (PC), en PolyChlorure de Vinyle (PVC), en Polytéréphtalate d'éthylène (PET) ou d'autres dérivés du plastique utilisés dans le domaine de la carte à puce. On peut noter que le module électronique, ou la puce RF, comprend deux points de contact configurés pour être connectés à une antenne RF disposée au-dessus de la couche 106. Ainsi des perforations peuvent exister dans la couche 106 pour venir connecter des points de contact de la puce RF ou du module électronique à l'antenne.

Lors d'une étape S8, une antenne est formée sur la couche 106. Cette antenne comprend deux ensembles de spires tels que
- le premier ensemble SET1 est routé en périphérie extérieure de la carte CD1, le long du bord métallique 113 de la carte, cet ensemble comprend au moins une spire qui ensuite rejoint ou encore se déploie vers l'intérieur de la carte,
- le second ensemble SET2 est routé en périphérie extérieure de la cavité 104 et comprend au moins une spire qui se déploie autour de la cavité 104,
- les deux ensembles SET1 et SET2 étant connectés électriquement,
- les spires étant disposées ou encore enroulées, de sorte que le courant circule dans le même sens dans le premier ensemble et dans le second ensemble.

Comme mentionné ci-dessus, l'extrémité de l'enroulement SET2 est connecté à un des points de contact de la puce RF, ou du module électronique, et l'autre extrémité de l'enroulement SET1 est connecté à l'autre point de contact de la puce RF ou du module électronique de manière à connecter électriquement l'antenne à la puce RF ou au module électronique.

Lors d'une étape S10, des couches de protection101a et 101b sont disposées de part et d'autre de la couche 102a et de la couche 106.

Lorsque le module est un module électronique permettant une communication avec contact, alors les couches 102a et 101a peuvent être percées en regard de ces points de contact de manière à ce que ces points de contact soient accessibles par un terminal extérieur, par exemple lors de l'insertion de la carte dans un terminal.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant, afin de répondre à un besoin bien particulier conformément aux revendications présentées ci-après.

## Revendications

1. Carte à puce (CD1) comprenant :
- un corps de carte (100) formé au moins en partie par une couche métallique (103) ladite couche métallique comprenant une zone d'évidement (104) formée d'une cavité et une jonction reliant la cavité à un bord périphérique de la carte à puce;
- un module électronique comprenant une puce RF (110) ;
**caractérisée en ce qu'**elle comprend aussi:
- au moins une antenne RF (AT1) connectée électriquement à la puce RF par une connexion physique conductrice, l'antenne étant disposée sur une couche non conductrice déposée sur la couche métallique, la puce RF étant disposée au niveau de la couche métallique et comprenant
- un premier ensemble de spires (SET1) routé le long du pourtour de la carte, cet ensemble comprenant au moins une spire se déployant vers l'intérieur de la carte, et connecté électriquement à
- un second ensemble de spires (SET2) routé à l'extérieur de ladite cavité, le long des bords de ladite cavité,
- les spires des deux ensembles de spires étant disposées de sorte que le courant circule dans le même sens dans le premier ensemble de spires et dans le second ensemble de spires.

2. Carte à puce selon la revendication 1 dans laquelle des courants de Foucault sont produits sous l'effet d'un champ magnétique incident auquel est soumise la carte, les spires du premier ensemble de spires (SET1) et les spires du second ensemble de spires (SET2) étant enroulées de manière à ce que ledit courant et les courants de Foucault circulent dans le même sens dans le second ensemble de spires (SET2), et en phase avec le champ magnétique incident.

3. Carte à puce selon l'une des revendications précédentes dans laquelle ledit module électronique est positionné dans ladite cavité.

4. Carte à puce selon l'une des revendications précédentes dans laquelle le centre de ladite cavité est situé au centre géométrique de la carte à puce.

5. Carte à puce selon l'une des revendications précédentes dans laquelle ladite cavité est de forme arrondie ou rectangle et centrée sur le centre de la carte à puce.

6. Carte à puce selon l'une des revendications précédentes dans laquelle ladite cavité est de forme arrondie, centrée sur le centre de la carte à puce et de diamètre 20mm.

7. Carte à puce selon l'une des revendications précédentes dans laquelle la surface de ladite cavité représente une surface sensiblement égale à 1,5% de la surface de la couche métallique.

8. Carte à puce selon l'une des revendications précédentes dans laquelle la cavité comprend un matériau diélectrique choisi parmi du bois, ou de la céramique, ou du caoutchouc rigide.

9. Carte à puce selon l'une des revendications précédentes dont le format est conforme au format ID1.

10. Procédé de fabrication d'une carte à puce (CD1) à partir d'un corps de carte (100) formé au moins en partie par une couche métallique (103)
- formation (S2) dans ladite couche métallique d'au moins une zone évidement (104) formée d'une cavité reliée par une jonction (112) à un bord périphérique (113) de la carte à puce,,
- assemblage (S4) d'un module électronique comprenant une puce RF (110),
- dépôt (S6) d'au moins de deux couches isolantes de part et d'autre de la couche métallique,
- formation (S8) d'une antenne connectée électriquement à la puce RF par une connexion physique conductrice sur l'une des dites couches isolantes comprenant
- un premier ensemble de spires (SET1) routé le long du pourtour de la carte, cet ensemble comprenant au moins une spire se déployant vers l'intérieur de la carte, et connecté électriquement à
- un second ensemble de spires (SET2) routé à l'extérieur de ladite cavité, le long des bords de ladite cavité,
- les spires des deux ensembles de spires étant disposées de sorte que le courant circule dans le même sens dans le premier ensemble de spires et dans le second ensemble de spires.

## Patentansprüche

1. Chipkarte (CD1), umfassend:
- einen Kartenkörper (100), der mindestens teilweise durch eine Metallschicht (103) gebildet wird, wobei die Metallschicht einen Aussparungsbereich (104) umfasst, der aus einem Hohlraum und einer Verbindung, die den Hohlraum mit einem Umfangsrand der Chipkarte verbindet, umfasst;
- ein elektronisches Modul, das einen HF-Chip (110) umfasst;
**dadurch gekennzeichnet, dass** sie auch umfasst:
- mindestens eine HF-Antenne (AT1), die mit dem HF-Chip elektrisch durch eine leitfähige physische Verbindung verbunden ist, wobei die Antenne auf einer nicht leitfähigen Schicht angeordnet ist, die auf die Metallschicht aufgebracht ist, wobei der HF-Chip der Höhe der Metallschicht angeordnet ist und umfasst
- eine erste Anordnung von Windungen (SET1), die entlang des Umfangs der Karte verläuft, wobei diese Anordnung mindestens eine Windung umfasst, die sich zum Inneren der Karte hin erstreckt und elektrisch verbunden ist mit
- einer zweiten Anordnung von Windungen (SET2), die außerhalb des Hohlraums verläuft, entlang der Ränder des Hohlraums,
- wobei die Windungen der beiden Anordnungen von Windungen so angeordnet sind, dass der Strom in der ersten Anordnung von Windungen und in der zweiten Anordnung von Windungen in die gleiche Richtung fließt.

2. Chipkarte nach Anspruch 1, wobei unter der Einwirkung eines einfallenden Magnetfeldes, dem die Karte ausgesetzt ist, Wirbelströme erzeugt werden, wobei die Windungen der ersten Anordnung von Windungen (SET1) und die Windungen der zweiten Anordnung von Windungen (SET2) so gewunden sind, dass der Strom und die Wirbelströme in der zweiten Anordnung von Windungen (SET2) in die gleiche Richtung und in Phase mit dem einfallenden Magnetfeld fließen.

3. Chipkarte nach einem der vorhergehenden Ansprüche, wobei das elektronische Modul in dem Hohlraum positioniert ist.

4. Chipkarte nach einem der vorhergehenden Ansprüche, wobei sich das Zentrum des Hohlraums im geometrischen Zentrum der Chipkarte befindet.

5. Chipkarte nach einem der vorhergehenden Ansprüche, wobei der Hohlraum von gerundeter oder rechteckiger Form ist und auf das Zentrum der Chipkarte zentriert ist.

6. Chipkarte nach einem der vorhergehenden Ansprüche, wobei der Hohlraum von gerundeter Form ist, auf das Zentrum der Chipkarte zentriert ist und einen Durchmesser von 20 mm hat.

7. Chipkarte nach einem der vorhergehenden Ansprüche, wobei die Fläche des Hohlraums eine Fläche ausmacht, die im Wesentlichen 1,5 % der Fläche der Metallschicht beträgt.

8. Chipkarte nach einem der vorhergehenden Ansprüche, wobei der Hohlraum ein dielektrisches Material umfasst, das aus Holz, Keramik oder starrem Kautschuk ausgewählt ist.

9. Chipkarte nach einem der vorhergehenden Ansprüche, deren Format dem Format ID1 entspricht.

10. Verfahren zur Herstellung einer Chipkarte (CD1) aus einem Kartenkörper (100), der mindestens teilweise aus einer Metallschicht (103) gebildet wird
- Bilden (S2), in der Metallschicht, mindestens eines Aussparungsbereichs (104), der aus einem Hohlraum gebildet wird, der durch eine Verbindung (112) mit einem Umfangsrand (113) der Chipkarte verbunden ist,
- Montieren (S4) eines elektronischen Moduls, das einen HF-Chip (110) umfasst,
- Aufbringen (S6) von mindestens zwei isolierenden Schichten zu beiden Seiten der Metallschicht,
- Bilden (S8) einer Antenne, die mit dem HF-Chip durch eine leitfähige physische Verbindung elektrisch verbunden ist, auf einer der isolierenden Schichten, umfassend
- eine erste Anordnung von Windungen (SET1), die entlang des Umfangs der Karte verläuft, wobei diese Anordnung mindestens eine Windung umfasst, die sich zum Inneren der Karte hin erstreckt und elektrisch verbunden ist mit
- einer zweiten Anordnung von Windungen (SET2), die außerhalb des Hohlraums verläuft, entlang der Ränder des Hohlraums,
- wobei die Windungen der beiden Anordnungen von Windungen so angeordnet sind, dass der Strom in der ersten Anordnung von Windungen und in der zweiten Anordnung von Windungen in die gleiche Richtung fließt.

## Claims

1. A smart card (CD1) comprising:
- a card body (100) at least partly formed by a metal layer (103), with said metal layer comprising a recessed area (104) formed by a cavity and a junction connecting the cavity to a peripheral edge of the smart card;
- an electronic module comprising an RF chip (110); **characterized in that** it comprises also
- at least one RF antenna (AT1) electrically connected to the RF chip by a conductive physical connection, the antenna being disposed on a non-conductive layer deposited onto the metal layer, the RF chip being disposed in the vicinity of the metal layer, and comprising:
- a first set (SET1) of turns routed along the perimeter of the card, with this set comprising at least one turn extending towards the inside of the card, and being electrically connected to:
- a second set (SET2) of turns routed outside said cavity, along the edges of said cavity;
- with the turns of the two sets of turns being disposed so that the current flows in the same direction in the first set of turns and in the second set of turns.

2. Smart card according to Claim 1, wherein eddy currents are produced under the effect of an incident magnetic field experienced by the card, with the turns of the first set (SET1) of turns and the turns of the second set (SET2) of turns being wound so that said current and the eddy currents flow in the same direction in the second set (SET2) of turns, and in phase with the incident magnetic field.

3. Smart card according to any of the preceding claims, wherein said electronic module is positioned in said cavity.

4. Smart card according to any of the preceding claims, wherein the centre of said cavity is located at the geometric centre of the smart card.

5. Smart card according to any of the preceding claims, wherein said cavity is round or rectangular and is centred on the centre of the smart card.

6. Smart card according to any of the preceding claims, wherein said cavity is round, is centred on the centre of the smart card and has a 20 mm diameter.

7. Smart card according to any of the preceding claims, wherein the surface of said cavity represents a surface that is substantially equal to 1.5 % of the surface of the metal layer.

8. Smart card according to any of the preceding claims, wherein the cavity comprises a dielectric material selected from among wood or ceramic or rigid rubber.

9. Smart card according to any of the preceding claims, the format of which conforms to the ID1 format.

10. Method for manufacturing a smart card (CD1) from a card body (100) at least partly formed by a metal layer (103), comprising:
- forming (S2) at least one recessed area (104) in said metal layer, which recessed area (104) is formed by a cavity connected by a junction (112) to a peripheral edge (113) of the smart card;
- assembling (S4) an electronic module comprising an RF chip (110);
- depositing (S6) at least two isolating layers on either side of the metal layer;
- forming (S8) an antenna electrically connected to the RF chip by a conductive physical connection on one of said isolating layers comprising:
- a first set (SET1) of turns routed along the perimeter of the card, with this set comprising at least one turn extending towards the inside of the card, and being electrically connected to:
- a second set (SET2) of turns routed outside said cavity, along the edges of said cavity;
- with the turns of the two sets of turns being disposed so that the current flows in the same direction in the first set of turns and in the second set of turns.
